Europäisches Patentamt

European Patent Office

Office européen des brevets

(11) Veröffentlichungsnummer : **0 356 872 B1**

(19)

(12)                    **EUROPÄISCHE PATENTSCHRIFT**

(45) Veröffentlichungstag der Patentschrift :
07.06.95 Patentblatt 95/23

(51) Int. Cl.⁶ : **G02B 6/26,** G02B 6/42,
C03B 37/15

(21) Anmeldenummer : 89115424.7

(22) Anmeldetag : 22.08.89

(54) Verfahren zum Ändern des Fleckdurchmessers von Monomode-Stufenfasern.

(30) Priorität : 25.08.88 DE 3828814

(43) Veröffentlichungstag der Anmeldung :
07.03.90 Patentblatt 90/10

(45) Bekanntmachung des Hinweises auf die
Patenterteilung :
07.06.95 Patentblatt 95/23

(84) Benannte Vertragsstaaten :
AT BE CH DE ES FR GB IT LI NL SE

(56) Entgegenhaltungen :
FR-A- 2 110 190
GB-A- 2 128 766
PATENT ABSTRACTS OF JAPAN, Band 9, Nr.
101 (P-353)[1824], 2. Mai 1985 ; & JP-A-59 226
310

(73) Patentinhaber : **Alcatel SEL**
**Aktiengesellschaft**
**Lorenzstrasse 10**
**D-70435 Stuttgart (DE)**
㊽ **DE**
Patentinhaber : **ALCATEL N.V.**
**Strawinskylaan 341,**
**(World Trade Center)**
**NL-1077 XX Amsterdam (NL)**
㊽ **BE CH ES FR GB IT LI NL SE AT**

(72) Erfinder : **Schlump, Dieter**
**Mercatorweg, 21a**
**D-7000 Stuttgart 40 (DE)**

(74) Vertreter : **Pohl, Herbert, Dipl.-Ing et al**
**Alcatel SEL AG**
**Patent- und Lizenzwesen**
**Postfach 30 09 29**
**D-70449 Stuttgart (DE)**

**Beschreibung**

Die vorliegende Erfindung bezieht sich auf ein Verfahren zum vorzugsweisen nachträglichen Ändern des Fleckdurchmessers von Monomode-Stufenfasern.

Für die Lichteinkopplung eines Monomodelasers in eine Monomode-Stufenfaser müssen der Fleckdurchmesser und die numerische Apertur der Faser dem Laser angepaßt werden, um minimale Einkoppeldämpfungen zu erreichen. Entsprechendes gilt beim Übergang von einer Monomode-Stufenfaser zur anderen, wobei dann Koppelverluste entstehen, wenn diese Monomode-Stufenfasern unterschiedliche Fleckdurchmesser und numerische Aperturen aufweisen.

Aus einer Untersuchung von K. Shigihara et al "MODAL FIELD TRANSFORMER BETWEEN DISSIMILAR WAVEGUIDES", ECOC 1986, Seiten 185 bis 188 ist es bekannt, eine Koppeleinheit zwischen optischen Wellenleitern, Lasern und integrierten optischen Einheiten mit Wellenleiterprofilen unterschiedlicher Querschnittsform, nämlich rechteckiger bzw. kreisförmiger Art, vorzusehen. Hierbei wird von einer im Querschnitt rechteckigen Faser ausgegangen, die aus sogenannten BK7-Glas hergestellt ist und bei der das Glas des Kerns mit Thalliumionen dotiert ist. Durch Erwärmen dieses Multimode-Faserabschnittes bei 600°C über drei Stunden hinweg wird durch einen Diffusionsprozeß durch Ionenaustausch zwischen den Thalliumionen im Kern und dem Kalium im Mantel erreicht, daß sich das Profil des Faserkerns stetig vergrößert und sich stetig von der Rechteckform zur Kreisform in seinem Querschnitt verändert.

Dadurch ist zwar eine Multimode-Koppeleinheit zwischen optischen Elementen mit rechteckigem Wellenleiter einerseits und Multimodefaser mit kreisförmigem Querschnitt andererseits erreicht, jedoch ist diese nicht für die eingangs erwähnten optischen Monomode-Elemente und -Stufenfasern gleicher, kreisrunder Querschnittsform einsetzbar. Darüber hinaus müssen derartige Multimode-Koppeleinheiten einem relativ langwierigen Diffusionsprozeß unterzogen werden.

Aufgabe der vorliegenden Erfindung ist es, ein Verfahren der im Anspruch 1 genannten Art anzugeben.

Diese Aufgabe wird bei einem Verfahren der genannten Art durch die im Anspruch 1 angegebenen Merkmale gelöst.

Mit dem Verfahren nach Anspruch 1 kann eine Monomodefaser-Koppeleinheit geschaffen werden, mit der sowohl bei einer Lichteinkoppelung in eine Monomode-Stufenfaser von einem Monomodelaser aus als auch beim Übergang von Monomode-Stufenfasern mit unterschiedlichen Größen die entstehenden Koppelverluste auf ein Minimum reduziert werden können.

Auf diese Weise ergibt sich bei der Verbindung von Monomodelasern und Monomode-Stufenfasern ein in sehr einfacher Weise herzustellender Aufbau für eine derartige Monomode-Koppeleinheit und eine erheblich geringere Einkoppeldämpfung. Entsprechendes gilt für eine bei der Verbindung unterschiedlicher Monomode-Stufenfasern verwendeten Koppeleinheit, die in sehr einfacher Weise herstellbar ist und die zu wesentlich niedrigeren Spleißdämpfungen führt.

Weitere vorteilhafte Ausgestaltungen ergeben sich hinsichtlich der Verfahrensschritte durch die Merkmale des Anspruchs 2 und/oder 3.

Weitere Einzelheiten der Erfindung sind der folgenden Beschreibung zu entnehmen, in der die Erfindung anhand des in der Zeichnung dargestellten Ausführungsbeispiels näher beschrieben und erläutert ist. Es zeigen:

| | |
|---|---|
| Figuren 1A-C | einen Abschnitt einer Monomodefaser im Längsschnitt bzw. das an drei unterschiedlichen Längsbereichen vorherrschende Brechzahlprofil der Monomodefaser bzw. das zum Ändern des Fleckdurchmessers der Monomodefaser angelegte Temperaturprofil, jeweils in schematischer Darstellung und gemäß einem bevorzugten Ausführungsbeispiels vorliegender Erfindung, |
| Figur 2 | das Brechzahlprofil einer Monomodefaser bei unterschiedlichem Diffusionsgrad und |
| Figur 3 | die Fleckradien bei unterschiedlichen Wellenlängen einer herkömmlichen Monomode-Stufenfaser vor und nach einer Profildiffusion. |

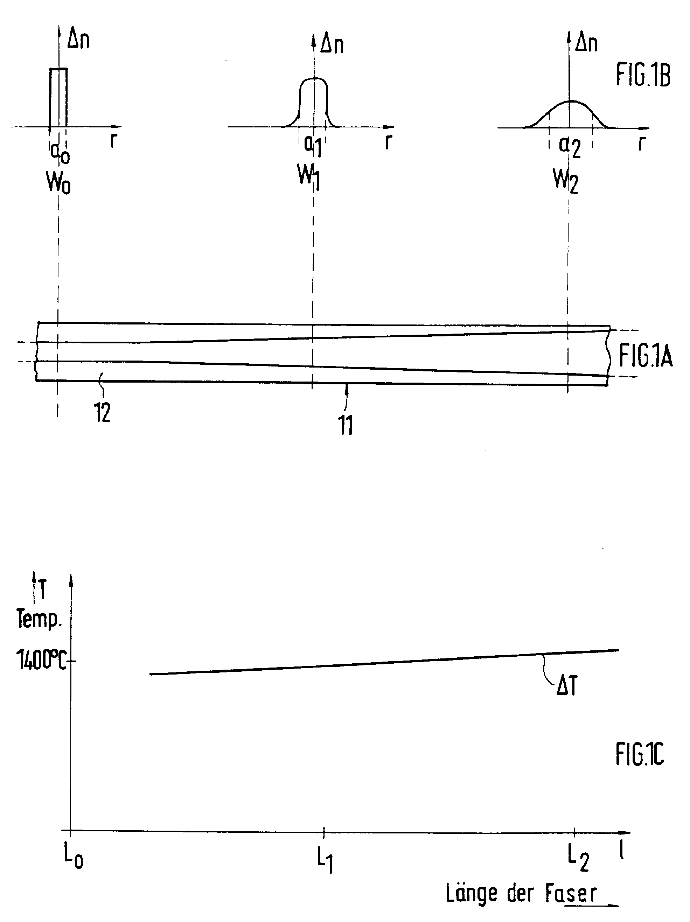

Die in Fig. 1A in einem Abschnitt bestimmter Länge dargestellte Monomodefaser 11 ist aus einer üblichen Monomode-Stufenfaser mit Hilfe des zu beschreibenden erfindungsgemäßen Verfahrens hergestellt, wobei diese Monomodefaser 11 eine Koppeleinheit darstellt, bei der eine im wesentlichen stetige Änderung des Fleckdurchmessers bzw. des Kerndurchmessers über ihre Länge erreicht ist, so daß eine Anpassung der unterschiedlichen Fleckdurchmesser bei optischen Bauelementen, wie Lasern, Monomodefasern und dgl. bei deren Verbindung erreicht ist.

Zur Erläuterung, wie dies erreicht wird, soll folgendes vorausgeschickt werden:

Beim Übergang von Monomode-Stufenfasern mit unterschiedlichen Fleckdurchmessern entstehen Koppelverluste. Dabei ergibt sich in bekannter Weise für Spleiße ein Koppelwirkungsgrad von

EP 0 356 872 B1

$$\eta = 4 \cdot \frac{W_1^2 \, W_2^2}{(W_1^2 + W_2^2)^2} \quad (1)$$

wobei $W_1$, $W_2$ der Fleckdurchmesser der beiden anzukoppelnden Fasern ist. Die Verluste, die durch Achsenversatz und Verkippung der zu verbindenden Faser entstehen, sind dabei nicht berücksichtigt. Eine Anpassung der Fleckdurchmesser der Fasern ist daher notwendig, um kleine Spleisdämpfungen zu erreichen.

Für den Fleckdurchmesser einer Monomode-Stufenfaser gilt mit guter Näherung im Bereich der normierten Frequenz V von $1,6 < V < 2,6$

$$Wo = a \cdot \frac{2,6}{V} \quad (2)$$

wobei a der Kerndurchmesser einer derartigen Faser ist.

Ferner ergibt sich für den Kerndurchmesser einer Monomode-Stufenfaser

$$a = (V \cdot \lambda)/(2 \cdot \pi \cdot n_1 \cdot \sqrt{2 \, \Delta n}) \quad (3)$$

wobei $\lambda$ die Betriebswellenlänge und

$$\Delta n = (n_1^2 - n_2^2)/(2 \cdot n_1^2) \quad (4)$$

also die nomierte Brechzahldifferenz, $n_1$ die Brechzahl des Kerns und $n_2$ die Brechzahl des Mantels einer derartigen Faser ist.

Für die numerische Apertur erhält man

$$NA = n_1 \cdot \sqrt{2 \, \Delta n} \quad (5)$$

Durch die Diffusion der Faserdotierung wird das Produkt aus effektivem Kerndurchmesser a und effektiver Brechzahldifferenz $\Delta n$ konstant gehalten, so daß gilt

$$a \cdot \Delta n = K \quad (6)$$

daraus erfolgt mit (3)

$$a \cdot \Delta n = \frac{1}{2\pi \cdot \sqrt{2}} \, \sqrt{\cdot \, \Delta n} \cdot Vc \cdot \lambda_c = K \quad (7)$$

mit $V_c$ als normierte Frequenz bei der Grenzwellenlänge $\lambda c$.

Es wird dabei ersichtlich, daß eine Änderung der Grenzwellenlänge $\lambda c$ mit

$$\lambda c = \frac{2 \cdot \sqrt{2} \cdot \pi \cdot K}{V_c \cdot \sqrt{\Delta n}} \quad (8)$$

durch die Profildiffusion erzeugt wird, die sich im wesentlichen mit

$$\lambda c \sim \frac{1}{\sqrt{\Delta n}} \quad (9)$$

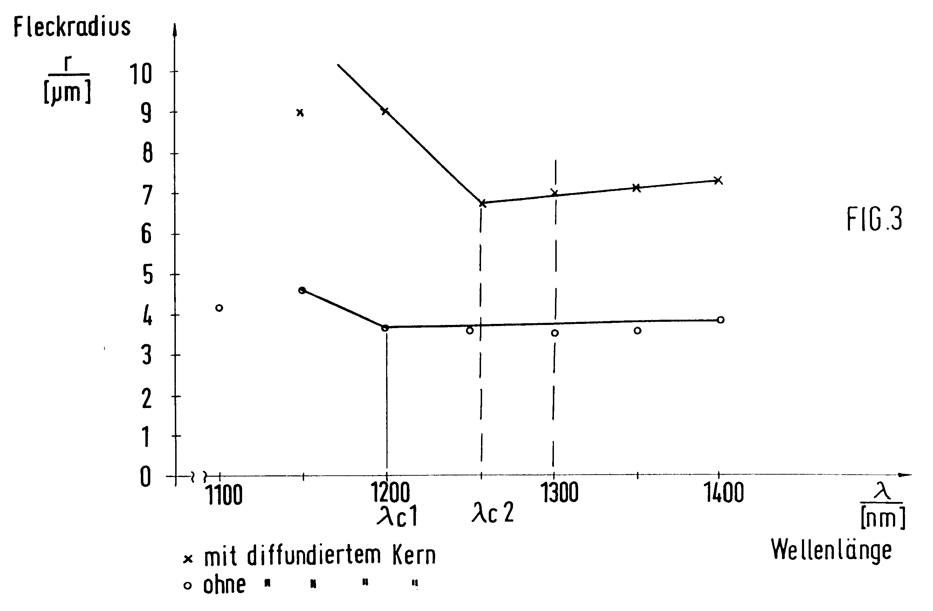

verhält. Dies wird auch in der Praxis bestätigt wie Figur 3 zeigt. Die geringe Änderung der Grenzwellenlänge ist dabei nicht wesentlich. Durch die Vergrößerung des effektiven Kerndurchmessers bei konstanter V Zahl ergibt damit auch eine Vergrößerung des Fleckdurchmesser Wo.

Aus (2), (3), (7) erhält man

$$Wo = \frac{2,6 \cdot \lambda}{2\pi \cdot n_1 \cdot \sqrt{\dfrac{2 \cdot K}{a}}} \quad (10)$$

daraus folgt

$$Wo \sim \sqrt{a} \quad (11)$$

Eine Vergrößerung des effektiven Kerndurchmessers der Faser bewirkt eine Vergrößerung des Fleckdurchmessers.

Dies bedeutet, daß durch eine Vergrößerung des Kerns und einem gleichzeitigem Absenken der Brechzahldifferenz $\Delta n$ in gezielter Weise eine Vergrößerung des Fleckdurchmessers Wo einer derartigen Faser erreicht werden kann.

Erfindungsgemäß wird eine Vergrößerung des Fleckdurchmessers gemäß der obigen Näherung (11) durch eine Vergrößerung des Kerndurchmessers einer Monomode-Stufenfaser dadurch erreicht, daß ein Abschnitt einer Monomode-Stufenfaser bestimmter Länge auf eine Temperatur von etwa 1400°C über eine bestimmte Zeit t erwärmt wird, so daß während dieser Zeit eine Ausdiffusion der $GeO_2$-Dotierung im $SiO_2$ erfolgen kann.

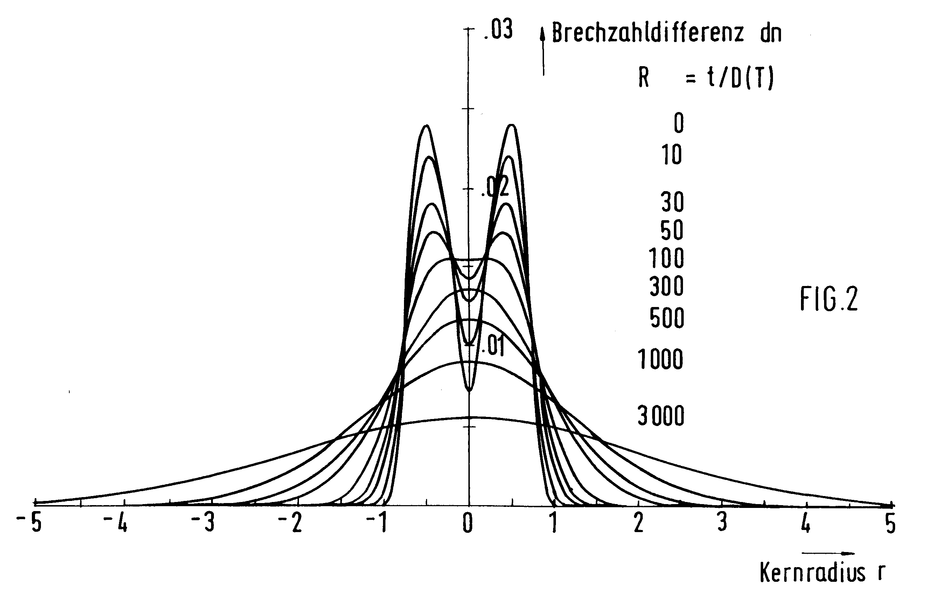

Figur 2 zeigt ein unter diesen Voraussetzungen errechnetes Brechzahlprofil in Abhängigkeit vom Kernradius einer Monomode-Stufenfaser. In Fig. 2 ist als Parameter der normierte Parameter $A=t/D(T)$ verwendet, wobei $D(T)$ die temperaturabhängige Diffusionskonstante von $GeO_2$ in $SiO_2$ ist.

Daraus ist ersichtlich, daß bei einer bestimmten Temperatur T, von, wie oben erwähnt, beispielsweise 1400°C in Abhängigkeit von der Zeit die Brechzahldifferenz absinkt und gleichzeitig der Kernradius vergrößert wird.

Wird nun eine Monomode-Stufenfaser mit einer Länge L einem Temperaturprofil, wie es in Fig. 1C darge-

3

stellt ist, also einer um 1400°C linear sich veränderden bzw. ansteigenden Temperatur $\Delta T$ ausgesetzt, so erhält man, wenn jeder Bereich der Länge L der Faser über eine bestimmte Zeit $\Delta t$ aufgrund der temperaturabhängigen Diffusionkonstante A eine kontinuierliche Profilverbreiterung des Kerns und somit eine kontinuierliche Vergrößerung des Fleckdurchmessers der Monomodefaser, wie sich dies aus dem in Fig. 1A dargestellten Längsschnitt der Monomodefaser und aus Fig. 1B ergibt, in der an drei Stellen $L_0$, $L_1$, $L_2$ der Monomodefaser das Brechzahlprofil mit den Fleckdurchmessern $W_0$, $W_1$, $W_2$ dargestellt ist. Gemäß dem in Fig. 1 dargestellten Ausführungsbeispiel ist somit eine Monomode-Stufenfaser über einen bestimmten Längenabschnitt über unterschiedliche Zeiten dem betreffenden Temperaturprofil ausgesetzt, so daß sich eine Monomodefaser 11 ergibt, die an ihrem Anfangsbereich 12 ein Brechzahlprofil entsprechend dem ursprünglichen Brechzahlprofil der Monomode-Stufenfaser aufweist, während sich das Brechzahlprofil über die Länge im wesentlichen kontinuierlich in der in zwei weiteren Abschnitten dargestellten Weise kontinuierlich verändert.

Zur Anpassung der unterschiedlichen Fleckdurchmesser zweier zu verbindender Monomode-Stufenfasern ist es nun möglich, die in Fig. 1A erfindungsgemäß mit verändertem Fleckdurchmesser geschaffene Monomodefaser 11 ein- oder beidendig jeweils an einer geeigneten Stelle zu brechen, an der derjenige Fleckdurchmesser vorhanden ist, der dem oder den Fleckendurchmessern der beiden miteinander zu verbindenden Monomode-Stufenfasern entspricht. Auf diese Weise ist eine Monomodefaser-Koppeleinheit geschaffen, mit der ein Anspleißen zweier Monomode-Stufenfasern mit optimaler Anpassung an den jeweiligen Fleckdurchmesser einfach und problemlos erfolgen kann.

Bei einem Ausführungsbeispiel wurde eine Monomode-Stufenfaser über etwa zwei Minuten auf Weißglut, also in dem genannten Temperaturbereich erhitzt. Messungen bei verschiedenen Wellenlängen ergaben gemäß Fig. 3, daß sich dadurch eine Fleckradienvergrößerung um etwa den Faktor 2 erreichen lassen.

Die Erfindung wurde zwar anhand einer Monomode-Stufenfaser, die aus einem $GeO_2$ dotierten $SiO_2$ hergestellt ist, beschrieben, jedoch ist das erfindungsgemäße Verfahren sinngemäß auch bei Fasern anwendbar, deren Kern undotiert ist, aber deren Mantelglasschichten beispielsweise mit Fluor dotiert sind. Durch die Erwärmung diffundiert die Dotiersubstanz in den Kern, wodurch dessen Fleckdurchmesser kleiner wird.

**Patentansprüche**

1. Verfahren zum Ändern des Fleckdurchmessers von Monomode-Stufenfasern, bei dem ein Abschnitt einer Monomode-Stufenfaser bestimmter Länge (1) über eine definierte Zeit (t) hinweg gemäß einem Temperaturprofil ($\Delta T$) erwärmt wird und dabei unterhalb der Schmelztemperatur der Monomode-Stufenfaser bleibt, **dadurch gekennzeichnet,** daß die Temperatur innerhalb des Temperaturprofils entlang der Faserlänge (1) linear ansteigt.

2. Verfahren nach Anspruch 1, dadurch gekennzeichnet, daß die Monomode-Stufenfaser in einem Temperaturbereich bei 1400°C erwärmt wird.

3. Verfahren nach Anspruch 1 oder 2, dadurch gekennzeichnet, daß die Monomode-Stufenfaser während weniger Minuten, vorzugsweise etwa 2 Minuten erwärmt wird.

**Claims**

1. A method of changing the spot diameter of single-mode step-index fibers, comprising the step of heating a section of a single-mode step-index fiber of a given length (1) in accordance with a temperature profile ($\Delta T$), with the temperature of the section remaining below the melting point of the single-mode step index fiber, **characterized in** that within the temperature profile along the fiber length (1), the temperature rises linearly.

2. A method as claimed in claim 1, characterized in that the single-mode step-index fiber is heated in a temperature range around 1400°C.

3. A method as claimed in claim 1 or 2, characterized in that the single-mode step-index fiber is heated for a few minutes, preferably about 2 minutes.

**Revendications**

1. Procédé pour modifier le diamètre de passage du mode de fibres monomodes à gradient d'indice, dans le cas duquel une portion d'une fibre monomode à gradient d'indice de longueur déterminée (1) est chauffée, pendant un temps défini (t), selon un profil de température ($\Delta T$) et y reste en dessous de la température de fusion de la fibre monomode à gradient d'indice,
   caractérisé par le fait que la température à l'intérieur du profil de température croît linéairement le long de la longueur (1) de la fibre.

2. Procédé selon la revendication 1, caractérisé par le fait que la fibre monomode à gradient d'indice est chauffée dans une plage de température de l'ordre de 1400°C.

3. Procédé selon la revendication 1 ou 2, caractérisé par le fait que la fibre monomode à gradient d'indice est chauffée pendant quelques minutes, de préférence pendant environ 2 minutes.

FIG.1B

FIG.1A

FIG.1C

Länge der Faser

FIG.2

Brechzahldifferenz dn

$R = t/D(T)$

0
10
30
50
100
300
500
1000
3000

Kernradius r

EP 0 356 872 B1

FIG.3